# EUROPEAN PATENT APPLICATION

(11) **EP 3 521 811 A1**
(43) Date of publication of application: **07.08.2019**
(21) Application number: 17856104.9
(22) Date of filing: 26.09.2017
(51) Int. Cl.: G01N 21/88, G01N 21/90

(54) **INSPECTION DEVICE AND METHOD FOR CONTROLLING IMAGING OF OBJECT OF INSPECTION**

(30) Priority: 30.09.2016 JP 2016194458
(71) Applicant: Kirin Techno-System Company, Limited, Kawasaki-shi, Kanagawa 210-0858 (JP)
(72) Inventor: HATSUKI, Takanori, Kawasaki-shi Kanagawa 210-0858 (JP)
(74) Representative: Hoffmann Eitle
(86) International application number: PCT/JP2017/034694
(87) International publication number: WO 2018/062154

(57) **Abstract**

In an inspection device including a rotary encoder (11) which outputs a signal correlated with a position of an object (BT) of inspection upon a conveyance path, and a camera control unit (14) which sets an imaging area to a portion of an imaging surface of a camera (10), and which controls imaging operation of the camera so that image signals limited to pixels included in the imaging area are read out, an imaging area determination unit (13) that, on the basis of the output signal of the rotary encoder (11), determines a position of the imaging area to be set so that an image of the area to be inspected on the object of inspection is positioned in the imaging area, is provided. The camera control unit (14) acquires the position of the imaging area repeatedly a plurality of times from the imaging area determination unit (13) while the object (BT) of inspection is moved within the inspection section of the conveyance path, and, by repeatedly setting the imaging area according to a determination result each time, repeatedly controls the imaging operation while changing the position of the imaging area so as to follow the movement of the object (BT) of inspection.

## Description

### TECHNICAL FIELD

The present invention relates to a device etc. that images an object of inspection such as a vessel or the like which is being conveyed, and that inspects the object of inspection on the basis of images that have been obtained.

### BACKGROUND ART

As an inspection device installed on a production line in order to inspect objects of inspection without stopping them, an inspection device is per se known (for example, refer to PTL1) in which a movable mirror is disposed on an optical path between a vessel to be inspected and a camera for imaging it, and, as the vessel is conveyed, images thereof are sequentially conducted to the camera by rotating the mirror in synchronization with the conveyance of the vessel. And an inspection device is per se known (for example, refer to PTL2) in which images within the field of view of a camera are repeatedly captured while the vessel which is to be inspected moves within the field of view of the camera, and inspection for foreign body presence is performed by performing image processing in which this sequence of images that have been repeatedly obtained by imaging are combined and/or compared together.

### CITATION LIST

### PATENT LITERATURE

PTL1: Japanese Laid-Open Patent Publication No.2004-279222.
PTL2: Japanese Laid-Open Patent Publication No.2011-95107.

### SUMMARY OF INVENTION

### TECHNICAL PROBLEM

With an inspection device that drives a mirror to follow a moving object to be inspected, due to constraints upon the operating speed of the mirror, it may not be possible adequately to cope with increase of the speed of the production line, in other words with increase of the speed of conveyance of the object of inspection. And, with an inspection device that captures a plurality of images over the entire field of view of a camera and performs combination and/or comparison of the images, while this is beneficial for increasing speed since it is not necessary to provide any mechanical moving element such as a mirror, since the image signals of all the pixels within the field of view are read out and processed, accordingly the amount of data to be processed and the amount of calculation are increased, and the response to increase of the conveyance speed may be constrained.

Accordingly, the object of the present invention is to provide an inspection device etc. with which the capability is enhanced for handling increase of the speed of conveyance of the object of inspection.

### SOLUTION TO TECHNICAL PROBLEM

An inspection device according to one aspect of the present invention is an inspection device that comprises a conveyance device which conveys an object of inspection along a predetermined conveyance path, and an imaging device capable of imaging an area to be inspected upon the object of inspection to be moved through an inspection section set upon the conveyance path by employing a two dimensional solid-state imaging element, and that inspects the object of inspection on the basis of images captured by the imaging device, the inspection device comprising: a position signal output device that outputs a signal correlated with the position of the object of inspection upon the conveyance path; an imaging control device that sets an imaging area to a portion of an imaging surface of the two dimensional solid-state imaging element, and controls imaging operation of the imaging device so that image signals limited to pixels included in the imaging area are read out; and an imaging area determination device that, on the basis of the output signal of the position signal output device, determines a position of the imaging area to be set by the imaging control device, so that an image of the area to be inspected is positioned in the imaging area, wherein the imaging control device acquires the position of the imaging area repeatedly a plurality of times from the imaging area determination device while the object of inspection is moved within the inspection section, and, by repeatedly setting the imaging area according to a determination result each time, repeatedly controls the imaging operation while changing the position of the imaging area so as to follow the movement of the object of inspection.

Moreover, a method for controlling imaging of an object of inspection according to one aspect of the present invention is a method for controlling imaging of an object of inspection to be applied to an inspection device that comprises a conveyance device which conveys the object of inspection along a predetermined conveyance path, an imaging device capable of imaging an area to be inspected upon the object of inspection to be moved through an inspection section set upon the conveyance path by employing a two dimensional solid-state imaging element, a position signal output device which outputs a signal correlated with a position of the object of inspection upon the conveyance path, and an imaging control device which sets an imaging area to a portion of an imaging surface of the two dimensional solid-state imaging element, and which controls imaging operation of the imaging device so that image signals limited to pixels included in the imaging area are read out, and that inspects the object of inspection on the basis of images captured by the imaging device, the method comprising: determining, on the basis of the output signals of the position signal output device, a position of an imaging area to be set by the imaging control device, so that an image of the area to be inspected is positioned in the imaging area; and causing the imaging control device to function so that the imaging area is set to the position determined by the determining the position, and that image signals limited to pixels included in the imaging area are read out, wherein the determining the position is performed repeatedly a plurality of times while the object of inspection is moved within the inspection section, and by repeatedly performing the causing the imaging control device to function so as repeatedly to set the imaging area according to a determination result each time the determining the position is performed and to control the imaging operation, control of the imaging operation is repeated while changing the position of the imaging area so as to follow the movement of the object of inspection.

According to the aspect described above, since the imaging area is set to a portion of the imaging surface and the imaging operation is repeated while changing the position of the imaging area so as to follow the movement of the image as the object of inspection is transported during conveyance, accordingly it is possible to image the area to be inspected upon the object of inspection as it moves without employing any mechanical moving part such as a mirror. Moreover, since the image signals that are read out are limited to the pixels included in the partial imaging area where the area to be inspected is positioned in place of reading out image signals for all of the pixels of the imaging surface, accordingly it is possible to shorten the time period required for reading out processing, and also it is possible to reduce the amount of data processing and the amount of calculation while performing image processing and so on. Due to this, it is possible adequately to enhance the capability for coping with increase of the speed of conveyance.

With the inspection device of the aspect described above, there may further be provided a rotational drive device that drives the object of inspection that is being conveyed so as to rotate around its axial line; and wherein the imaging control device repeatedly controls the imaging operation while changing the position of the imaging area so that a range of a predetermined length in a direction of rotation of the area to be inspected is imaged a plurality of times. According to this, by imaging the object of inspection a plurality of times while it rotates along its direction of rotation, it is possible to acquire images over a range which could not be covered by performing imaging only once, even in a state in which the object of inspection is being conveyed at high speed.

Moreover, the imaging control device repeatedly sets the imaging area on a cycle such that images of the object of inspection imaged corresponding to each of the imaging areas set each time the imaging operation is performed mutually follow one another along the direction of rotation, and the imaging operation is repeated. Due to this, it is possible to acquire images of the area to be inspected captured successively along the direction in which it rotates.

And, in the inspection device of the aspect described above, the two dimensional solid-state imaging element is provided with a primary transmission part that transmits image signals extracted from the pixels in a direction along one side of the imaging surface, and a secondary transmission part that transmits image signals transmitted by the primary transmission part in a direction along another side of the imaging surface; and the imaging area is set so that its longitudinal direction is aligned in the direction along the other side. In the two dimensional solid-state imaging element, the extraction of the image signals from the pixels to the primary transmission part is performed in sequence for each pixel column arranged in the direction of the secondary transmission part. Due to this, if the longitudinal direction of the imaging area is oriented in the direction along which the secondary transmission parts are positioned in sequence, then it is possible to increase the efficiency at which the image signals are extracted from the pixels to the primary transmission part, so that it is possible further to reduce the time required for reading out the image signals and further to enhance the capability for responding to increase of the conveyance speed.

### BRIEF DESCRIPTION OF DRAWINGS

Fig. 1 is a plan view of principal portions of an inspection device according to an embodiment of the present invention;
Fig. 2 is a block diagram showing the structure of principal portions of a control system of the inspection device of Fig. 1;
Fig. 3 is a figure showing a correspondence relationship between the imaging surface of a two dimensional solid-state imaging element within the camera, and imaging areas; and
Fig. 4 is a flow chart showing a procedure for imaging control.

### DESCRIPTION OF EMBODIMENTS

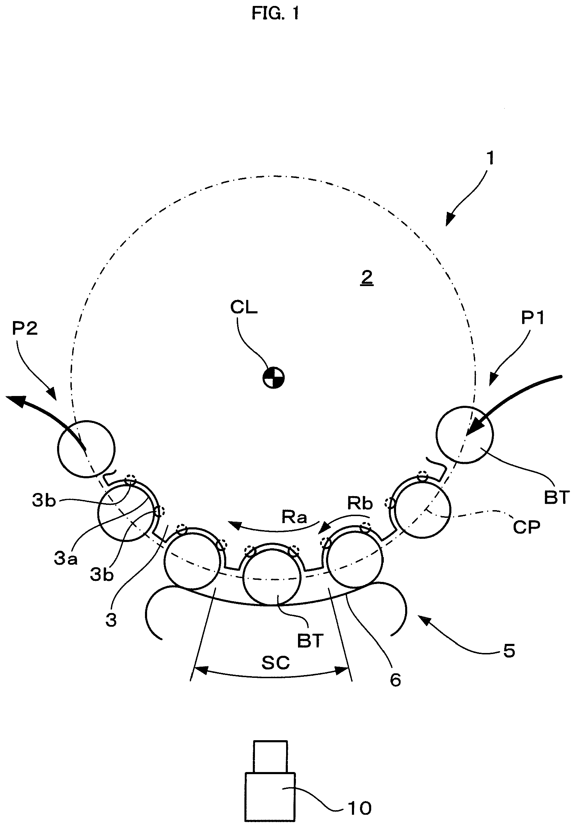

An inspection device according to an embodiment of the present invention and a method for controlling imaging that employs the inspection device will now be explained with reference to the drawings. The inspection device of Fig. 1 inspects the external appearance of the body part of a glass bottle BT, which is an example of an object of inspection. A star wheel conveyance device 2 is provided to the inspection device 1, and serves as a device for conveying the bottle BT. The star wheel conveyance device 2 is a per se known conveyance device in which a circular disk shaped star wheel 3 that is provided with pockets 3a at regular intervals around its external periphery is rotated about its center line CL by a drive mechanism not shown in the figures, and, as shown by the arrow Ra in the figure, bottles BT are conveyed from a feed-in position P1 at the external periphery of the star wheel 3 to a take-out position P2 along a circular arcuate conveyance path CP (whose center line is shown by a single-dotted broken line), by bottles BT being delivered to the feed-in position P1 and being taken into the pockets 3a and moreover bottles BT at the take-out position P2 being taken out from the pockets 3a. In other words, this star wheel conveyance device 2 is an example of a conveyance device all of whose conveyance path CP is set so as curve around a circular arc. For example, an inspection station SC may be provided partway along the conveyance path CP, at an intermediate position between the feed-in position P1 and the take-out position P2.

A spin device 5 is provided to the inspection section SC that rotates the bottles BT around their axial lines as shown by the arrow sign Rb in the figure, and that is one example of a rotational drive device. The spin device 5 drives a belt 6 that is provided so as to contact against the body parts of the bottles BT received in the pockets 3a, and thereby drives the bottles BT to rotate around their axial lines within the pockets 3a. Each of the pockets 3a is provided with a plurality of rollers 3b (in the figure, two thereof) for allowing the rotation of a bottle BT within the pocket 3a. The bottles BT move along the conveyance path CP while rotating within the inspection section SC, due to being driven by the spin device 5. The inspection section SC is set so that, while each bottle BT moves through it, the bottle BT rotates through one revolution or more. As each of the bottles BT is moved through the inspection section SC while being rotated and while being illuminated by an illumination device not shown in the figures, the inspection device 1 captures an image of an area to be inspected that is set upon the bottle BT from outside its external periphery, for example an image of the body part of the bottle BT, by employing a camera 10 which is an example of an imaging device that performs imaging, and inspects the quality of the external appearance of the body part on the basis of the image obtained. Furthermore, the belt 6 is provided so as to contact the bottles BT at positions at which photography of the body parts of the bottles BT is not impeded.

The camera 10 replaces an optical image of the body part that has been formed upon an imaging surface of a two-dimensional solid-state imaging element with an electronic image by employing a photoelectric conversion element, sequentially reads out image signals that have been accumulated as electric charges in the pixels that make up the electronic image, amplifies these image signals, and outputs them after performing AD conversion and so on. The two-dimensional solid-state imaging element used is of a type in which it is possible to set an imaging area upon only a portion of all the pixels included in its imaging surface, and it is possible selectively to read out only the image signals from the pixels included in the imaging area. As one example, a CMOS image sensor may be used as the two dimensional solid-state imaging element. If a CMOS image sensor is employed, then the charges of each pixel are converted into voltages and read out. However the two dimensional solid-state imaging element is not limited to being a CMOS image sensor; various types of image sensor may be employed as the two dimensional solid-state imaging element, provided that it is capable of controlling the reading out of image signals to a limited partial region of its imaging surface.

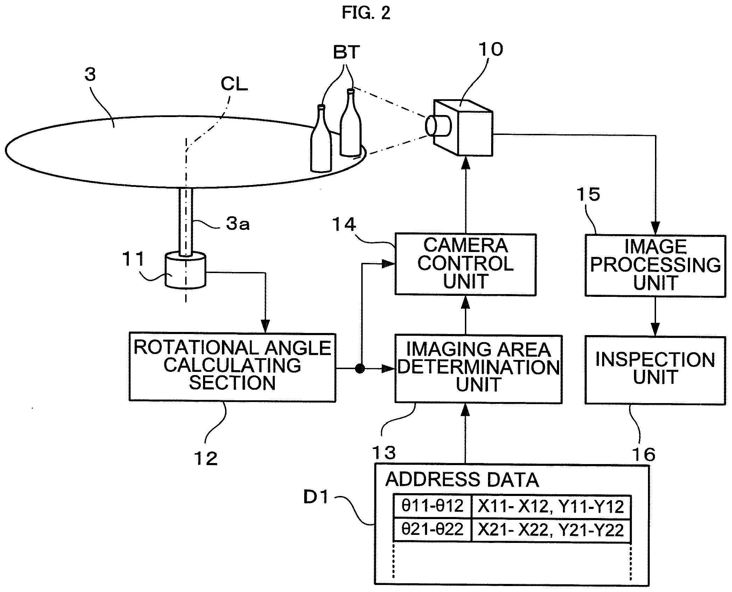

Next, principal portions of a control system of the inspection device 1 will be explained with reference to Fig. 2. A rotary encoder 11 is connected to a pivot shaft 3a of the star wheel 3, and is one example of a position signal output device that outputs a signal correlated with the positions of the bottles B on the conveyance path CP. For example, the rotary encoder 11 may be a so-called incremental type rotary encoder that outputs a pulse signal each time the star wheel 3 rotates through a predetermined unit angle. The output signal of the rotary encoder 11 is sent to a rotational angle calculating section 12. On the basis of the output signal of the rotary encoder 11, the rotational angle calculating section 12 calculates the angle of rotation of the star wheel 3 from a predetermined origin position which is set to the star wheel 3. In other words, taking a state when the star wheel 3 is at the origin position as a reference, the rotational angle calculating section 12 calculates the rotational angle from the origin position by integrating the number of pulses outputted from the rotary encoder 11, and by multiplying the integrated value by the unit angle described above. The origin position may be set as appropriate. Moreover, the rotational angle calculating section 12 resets the integrated value of the number of pulses to zero each time the rotational angle reaches 360°. However, a so-called absolute type rotary encoder that outputs a code corresponding to the rotational angle from an origin position set in advance could also be employed as the rotary encoder 11. In this case, processing to integrate the number of pulses and to reset that number to its initial value is not required.

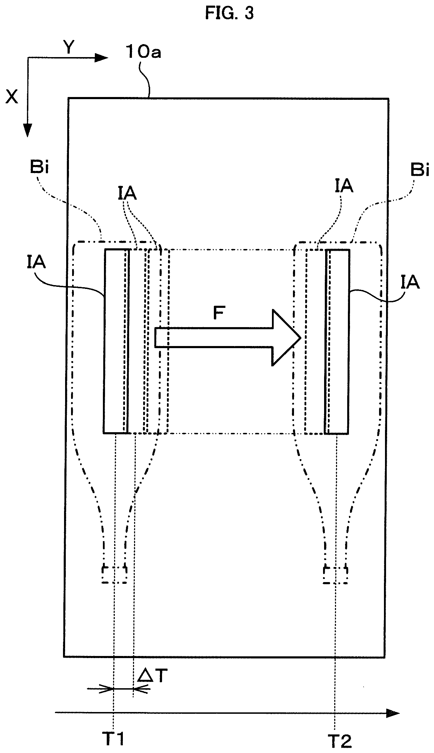

The rotational angle calculated by the rotational angle calculating section 12 is supplied to an imaging area determination unit 13 and to a camera control unit 14. And, on the basis of the rotational angle determined by the rotational angle calculating section 12, the imaging area determination unit 13 determines the position of an imaging area to be set upon the imaging surface of the camera 10. The imaging area is set upon a portion of the imaging surface of the camera 10, and is a set of pixels that are to be subjects for which reading out of the image signals is to be performed. The setting of the imaging area will now be explained with reference to Fig. 3.

As shown in Fig. 3, the camera 10 is arranged so that its imaging surface 10a is set with its long side vertical. Taking the state in which a two dimensional solid-state imaging element is disposed with its long side horizontal as a reference, generally the imaging element is provided with a vertical transmission part that transmits image signals extracted from the pixels in the short side direction of the imaging surface 10a (i.e. its column direction) and a horizontal transmission part that transmits image signals transmitted from the vertical transmission part in the long side direction of the imaging surface 10a (i.e. its row direction). Since the long side direction and the short side direction of the imaging surface 10a are interchanged in the case shown in Fig. 3 in which the imaging surface 10a is set with its long side vertical, accordingly the vertical transmission part comes to extend along the horizontal direction of the drawing paper while the horizontal transmission part comes to extend along the vertical direction of the drawing paper. In the following, the vertical transmission part will be termed the "primary transmission part" and the horizontal direction of the imaging surface 10a along which this primary transmission part extends will be defined as being the Y axis direction, while the horizontal transmission part will be termed the "secondary transmission part" and the vertical direction of the imaging surface 10a along which this secondary transmission part extends will be defined as being the X axis direction.

An entire image Bi of the bottle BT is formed in an inverted state on the imaging surface 10a. As the bottle BT moves through the inspection section SC, the entire image Bi shifts from left to right over the imaging surface 10a. Assuming that imaging is started at the time point T1 that the bottle BT arrives at the inspection section SC and the image Bi is captured upon the imaging surface 10a, an imaging area IA is set so as to match the central portion of the body part in the horizontal direction (i.e. the Y axis direction) which, among the entire image Bi of the bottle BT, is the area to be inspected. The imaging area IA is rectangular with its long side vertical, i.e. with its longitudinal direction oriented in the X axis direction upon the imaging surface 10a, in other words in the direction along which the secondary transmission part extends.

After imaging starts, the position of the imaging area IA changes gradually in the Y axis direction so as to follow the movement of the entire image Bi during the interval until the time point T2 arrives at which the bottle BT has made one rotation. In other words, while the bottle BT moves in the inspection section SC, the imaging area IA shifts sequentially as shown by the arrow F over the imaging surface 10a so that, among the entire image Bi, it can capture the central portion of the main bottle body. As the bottle BT rotates, different regions of its body part appear sequentially in the central portion of the entire image Bi. Accordingly it is possible to perform imaging over the entire body part of the bottle BT that is being conveyed by repeatedly setting the imaging area IA on a cycle of period ΔT so that the regions of the body part of the bottle BT included in the imaging area IA mutually continue in its direction of rotation (the Y axis direction in Fig. 3), and repeatedly acquiring images in the imaging area IA. Furthermore, as is clear from Fig. 3, the period ΔT is set so that an area of a portion of the body part is imaged in duplicate, in other words the period is set so that the two end portions of the area of the body part in the direction of rotation included in the image acquired at each of the imaging time points overlaps with the preceding one and the subsequent one. The reason for this is to avoid the occurrence of areas in the body part that are not photographed due to the rotation of the bottle BT.

Upon acquisition of the rotational angle from the rotational angle calculating section 12, the imaging area determination unit 13 refers to address data D1 and determines the position upon the imaging surface 10a where the imaging area IA is to be set. The address data D1 is data in which the rotational angles of the star wheel 3 and the positions upon the imaging surface 10a where the imaging areas IA are to be set are recorded in association with each other, and is stored in an EEPROM or another non-volatile storage medium of the inspection device 1. There is a correlation relationship between the rotational angle of the star wheel 3 and the positions in the inspection section SC of the bottles BT that are held in each of the pockets 3a, and, when the rotational angle is known, it is possible to determine in advance the positions of the bottles BT in the inspection section SC. And, when the position of a bottle BT in the inspection section SC is known, it is possible to specify in advance a position of the imaging area IA to be set on the imaging surface 10a where an image of the central portion of the body part can be captured. The address data D1 employs this type of correlation relationship, and is constructed by specifying the positions upon the imaging surface 10 at which the imaging areas IA are to be set in association with the rotational angles, and by describing this correspondence relationship. For example, the positions upon the imaging surface 10a may be specified by the coordinate values of the imaging area IA in the X axis direction and the Y axis direction, and, in the address data D1, the relationship between the rotational angle and the position of the imaging area IA may be described so as to set the imaging area IA to the range between the X axis coordinates X11 and X12 and the range between the Y axis coordinates Y11 and Y12 when the rotational angle is between θ11 and θ12, and to set the imaging area IA to the range between the X axis coordinates X21 and X22 and the range between the Y axis coordinates Y21 and Y22 when the rotational angle is between θ21 and θ22.

The position of the imaging area IA determined by the imaging area determination unit 13 is supplied to the camera control unit 14. On the basis of the rotational angle calculated by the rotational angle calculating section 12, each time a bottle BT is transferred to the inspection section SC, the camera control unit 14 determines an imaging start time point T1 and an imaging end time point T2 for the bottle BT, and, in the interval from the imaging start time point T1 to the imaging end time point T2, each time the cycle period ΔT arrives, the camera control unit 14 acquires information specifying the position of the imaging area IA from the imaging area determination unit 13. In the example shown in the figure, the information is the X coordinate values and the Y coordinate values corresponding to the rotational angle specified according to the address data D1. And the camera control unit 14 sets the imaging area IA upon the imaging surface 10a of the camera 10 according to the information about the position of the imaging area IA, and controls the imaging operation of the camera 10 so that the image signals that are read out are limited to the pixels included in this imaging area IA.

The image signals outputted together with the imaging operation of the camera 10 are conducted to an image processing unit 15. The image processing unit 15 performs the image processing necessary for inspection upon the image signals outputted from the camera 10, as appropriate. The images processed by the image processing unit 15 are supplied to an inspection unit 16. The inspection unit 16 inspects the images acquired from the image processing unit 15 according to a predetermined algorithm, and determines whether the external appearance of the body part of the bottle BT is acceptable or unacceptable, for example whether or not an anomalous region such as damage, a defect, fouling or the like is present. Furthermore, the inspection unit 16 may perform inspection each time an image signal is outputted from the image processing unit 15, or may temporarily store the image signals outputted from the image processing unit 15 from the imaging start time point T1 until the imaging end time point T2, and may then perform inspection after having created an image by stitching together the resultant images into an image that covers the entire extent of the body part.

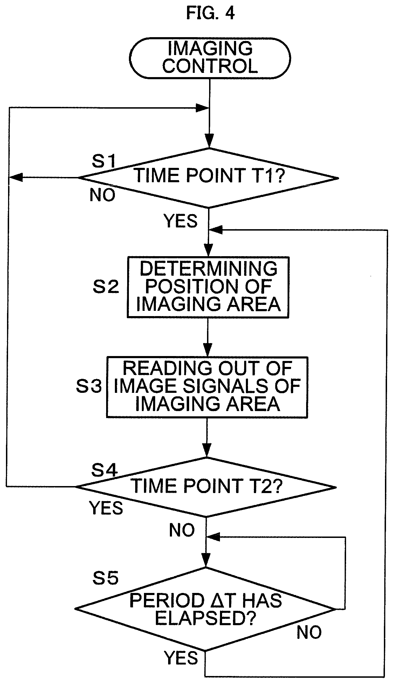

Fig. 4 shows an imaging control procedure performed by the control system of the inspection device 1. The processing of Fig. 4 is executed continuously while bottles BT are being conveyed by the star wheel conveyance device 2 of the inspection device 1. When the imaging control procedure of Fig. 4 is started the camera control unit 14 determines, on the basis of the rotational angle calculated by the rotational angle calculating section 12, whether or not an imaging start time point T1 for a bottle BT has arrived (step S1), and if it has not arrived this determination is repeated. When an imaging start time point T1 arrives, the imaging area determination unit 13 determines the position of the imaging area IA on the basis of the rotational angle calculated by the rotational angle calculating section 12 (step S2). Next, on the basis of the determination result of step S2, the camera control unit 14 sets the imaging area IA upon the imaging surface 10a of the camera 10, and controls the imaging operation of the camera 10 so as to read out image signals limited to the pixel group included in the imaging area IA (step S3). As one example, the setting of the imaging area IA is a setting process of a set of pixels whose image signals are subjects to be read out. If a CMOS image sensor is employed, then it is possible to limit the pixel group that is to be read out to the pixel group included in the imaging area IA by performing processing to turn on in sequence the switches between the group of pixels that are to be read out and the primary and the secondary transmission parts corresponding thereto, while keeping other switches off.

The image signals obtained by the processing of step S3 are outputted to the image processing unit 15. After the image signals have been read out, the camera control unit 14 decides, on the basis of the rotational angle calculated by the rotational angle calculating section 12, whether or not the imaging end time point T2 for the bottle BT has arrived (step S4). If it has not arrived, then the camera control unit 14 decides whether or not the next imaging time point has arrived, in other words whether or not the period ΔT has elapsed after the imaging of step S3 (step S5). If the period ΔT has not elapsed, then this decision is repeated. But if the period ΔT has elapsed, then the processing of step S2 and subsequently is executed again. If in step S4 it is decided that the imaging end time point T2 has arrived, then the imaging of one bottle BT terminates, and the processing returns to step S1 in preparation for imaging of the next bottle BT.

According to the inspection device 1 described above, since the position of the imaging area IA is changed while imaging a bottle BT as the bottle is conveyed so as to follow the motion of the entire image Bi of the bottle BT over the imaging surface 10a of the two dimensional solid-state imaging element, accordingly there is no requirement for operation of any mechanical moving part such as a mirror, and it is possible to cope with an increase of the speed of conveyance which might exceed the limitations of a movable part of that type. Moreover, since all of the pixels on the imaging surface 10a of the camera 10 are not the subjects whose image signals are read out, but rather the image signals that are read out are limited to those from the pixels included in the imaging area IA which is set to match the position of the area to be inspected on the bottle BT, accordingly it is possible to shorten the processing time required for reading out the image signals, and moreover it is possible to reduce the amount of calculation required for processing the image signals. Due to this, it is possible considerably to enhance the capability for handling increase of the conveyance speed.

It is possible further to increase the speed of processing for reading out the image signals from the pixels, since the camera 10 is arranged so that the imaging surface 10a of its two dimensional solid-state imaging element is aligned with its long side vertical, which implies that the longitudinal direction of the imaging area IA matches the transmission direction of the secondary transmission part upon the imaging surface 10a. In other words, since the processing for extracting the image signals from the pixels to the primary transmission part is performed in sequence for each pixel column lined up along the direction orthogonal to the direction of transmission by the primary transmission part, i.e. along the X axis direction in Fig. 3, accordingly, when the imaging area IA is set so as to be elongated along the X axis direction, the number of times processing is performed to extract image signals to the primary transmission part is reduced, and thereby it is possible to anticipate reduction of the time required for reading out the image signals and increase of the processing speed. However, this type of structure is not essential; the two dimensional solid-state imaging element could also be disposed in an orientation with its imaging surface with its long side horizontal, and the imaging area could be set on its imaging surface with its long side vertical.

In the embodiment described above, by executing the processing of step S2 of Fig. 4, the imaging area determination unit 13 functions as an example of an imaging area determination device, and, by executing the processing of step S3 of Fig. 4, the camera control unit 14 functions as an example of an imaging control device. However, the present invention is not limited to the embodiment described above; it may be implemented in various forms. For example, the conveyance device is not limited to being a star wheel conveyance device, and its conveyance path is not limited to being a circular arc. A belt conveyor device or the like that conveys the object of inspection along a rectilinear conveyance path could also be provided as the conveyance device. The inspection section upon the conveyance path could also be set to any appropriate position and length. The position signal output device is not limited to being a rotary encoder; provided that it is capable of outputting a signal that correlates with the position of the object of inspection in the inspection section, any appropriate detection device may be employed as the position signal output device. The object of inspection is not limited to being a bottle BT; vessels of various types could be the object of inspection, and the present invention could also be applied as an inspection device whose subject is an object of inspection other than a vessel. Moreover, the area to be inspected is not limited to being the body part of a bottle BT; the entire area of the object of inspection, or parts thereof, may be set as the area to be inspected. And the inspection device is not limited to having the objective of inspecting external appearance; it may be an inspection device having some other objective, such as detecting admixture of foreign matter.

In the embodiment described above, a bottle BT that was conveyed by being rotated was described as one example of an object of inspection, but the inspection device of the present invention is not necessarily limited to a configuration in which an object to be inspection is imaged while being rotated. For example, the present invention could also be applied to a case in which, while an object to be inspected is being conveyed without being rotated, this object being conveyed is imaged several times, and inspection thereof is performed via combining and comparing the resulting images.

## Claims

1. An inspection device that comprises a conveyance device which conveys an object of inspection along a predetermined conveyance path, and an imaging device capable of imaging an area to be inspected upon the object of inspection to be moved through an inspection section set upon the conveyance path by employing a two dimensional solid-state imaging element, and that inspects the object of inspection on the basis of images captured by the imaging device, the inspection device comprising:
a position signal output device that outputs a signal correlated with the position of the object of inspection upon the conveyance path;
an imaging control device that sets an imaging area to a portion of an imaging surface of the two dimensional solid-state imaging element, and controls imaging operation of the imaging device so that image signals limited to pixels included in the imaging area are read out; and
an imaging area determination device that, on the basis of the output signal of the position signal output device, determines a position of the imaging area to be set by the imaging control device, so that an image of the area to be inspected is positioned in the imaging area,
wherein the imaging control device acquires the position of the imaging area repeatedly a plurality of times from the imaging area determination device while the object of inspection is moved within the inspection section, and, by repeatedly setting the imaging area according to a determination result each time, repeatedly controls the imaging operation while changing the position of the imaging area so as to follow the movement of the object of inspection.

2. An inspection device according to Claim 1, further comprising a rotational drive device that drives the object of inspection that is being conveyed so as to rotate around its axial line; and
wherein the imaging control device repeatedly controls the imaging operation while changing the position of the imaging area so that a range of a predetermined length in a direction of rotation of the area to be inspected is imaged a plurality of times.

3. An inspection device according to Claim 2, wherein the imaging control device repeatedly sets the imaging area on a cycle such that images of the object of inspection imaged corresponding to each of the imaging areas set each time the imaging operation is performed mutually follow one another along the direction of rotation, and the imaging operation is repeated.

4. An inspection device according to any one of Claims 1 through 3, wherein the two dimensional solid-state imaging element is provided with a primary transmission part that transmits image signals extracted from the pixels in a direction along one side of the imaging surface, and a secondary transmission part that transmits image signals transmitted by the primary transmission part in a direction along another side of the imaging surface; and
the imaging area is set so that its longitudinal direction is aligned in the direction along the other side.

5. A method for controlling imaging of an object of inspection to be applied to an inspection device that comprises a conveyance device which conveys the object of inspection along a predetermined conveyance path, an imaging device capable of imaging an area to be inspected upon the object of inspection to be moved through an inspection section set upon the conveyance path by employing a two dimensional solid-state imaging element, a position signal output device which outputs a signal correlated with a position of the object of inspection upon the conveyance path, and an imaging control device which sets an imaging area to a portion of an imaging surface of the two dimensional solid-state imaging element, and which controls imaging operation of the imaging device so that image signals limited to pixels included in the imaging area are read out, and that inspects the object of inspection on the basis of images captured by the imaging device, the method comprising:
determining, on the basis of the output signals of the position signal output device, a position of an imaging area to be set by the imaging control device, so that an image of the area to be inspected is positioned in the imaging area; and
causing the imaging control device to function so that the imaging area is set to the position determined by the determining the position, and that image signals limited to pixels included in the imaging area are read out,
wherein the determining the position is performed repeatedly a plurality of times while the object of inspection is moved within the inspection section, and
by repeatedly performing the causing the imaging control device to function so as repeatedly to set the imaging area according to a determination result each time the determining the position is performed and to control the imaging operation, control of the imaging operation is repeated while changing the position of the imaging area so as to follow the movement of the object of inspection.
